# FASCICULE DE BREVET EUROPEEN

(11) **EP 0 908 991 B1**
(45) Date de publication et mention de la délivrance du brevet: **22.01.2003**
(21) Numéro de dépôt: 98402491.9
(22) Date de dépôt: 07.10.1998
(51) Int. Cl.: H02G 3/04

(54) **Accessoire pour conduit de câblage électrique**
Zubehör für elektrischen Verkabelungsrohrleiter
Electrical cabling duct accessory

(30) Priorité: 09.10.1997 FR 9712593
(43) Date de publication de la demande: 14.04.1999
(73) Titulaire: Planet Wattohm, 60300 Senlis (FR)
(72) Inventeur: Albert, Christophe, 60700 Pont Sainte Maxence (FR); Portier, Robert, 60700 Fleurines (FR)
(74) Mandataire: CABINET BONNET-THIRION

(56) Documents cités:
- EP-A- 0 518 404
- GB-A- 2 311 419

## Description

L'invention se rapporte à un accessoire pour conduit de câblage électrique, typiquement un conduit comprenant une goulotte en matériau semi-rigide, relativement tendre, comme par exemple en matière plastique extrudée; l'invention concerne plus particulièrement un accessoire utile ou nécessaire à certains emplacements du conduit et susceptible d'être monté et fixé automatiquement sur la goulotte par un montage "en façade" sans utilisation de moyen de fixation supplémentaire impliquant par exemple l'utilisation de colle ou de vis.

A titre d'application, l'accessoire peut notamment consister en un embout de conduit destiné à venir fermer l'extrémité d'un conduit, en un joint de couvercle dudit conduit, pour recouvrir deux extrémités adjacentes de deux extrémités d'un profilé constituant le couvercle de la goulotte ou encore un dispositif de recouvrement pour angle de conduit, utilisable aux emplacements où le conduit change de direction.

Le document EP 0 518 404 décrit une goulotte dont les ailes longitudinales comportent deux larges gorges dans lesquelles s'engagent les parois latérales d'un couvercle à profil en U. Ce dernier comporte des éléments élastiques qui l'immobilisent, par frottement, dans la goulotte.

Dans la suite de la description, l'accessoire qui fera plus particulièrement l'objet de la description est un embout destiné à être fixé à une extrémité d'un tel conduit. On connaît un tel type d'embout destiné à venir obturer l'extrémité d'un conduit lorsque le câblage est terminé. Il est conformé et dimensionné pour s'engager axialement dans le conduit constitué de la goulotte et de son couvercle. Pour résister aux chocs ou autres sollicitations, l'accessoire est vissé ou collé à la paroi et/ou au conduit. Il doit être engagé en bout.

Dans le cas le plus fréquent, le couvercle est mis en place après fixation de l'embout. Dans le cas d'un embout recouvrant, le couvercle doit être engagé sous l'embout avant son encliquetage sur le fond. Lorsque l'extrémité du conduit se trouve près d'un angle, le montage s'en trouve compliqué car il faut fixer l'embout sur le fond du conduit avant de fixer ce fond sur le mur.

L'invention permet d'éviter ces opérations compliquées et fastidieuses en proposant un accessoire (typiquement un embout) permettant de se monter en façade, c'est-à-dire selon une direction perpendiculaire à l'axe du conduit et venant se fixer et s'immobiliser par simple emboîtement à force, perpendiculairement à la direction longitudinale de ladite goulotte.

Plus précisément, l'invention concerne un accessoire pour conduit de câblage électrique, ledit conduit comprenant une goulotte en matériau relativement tendre, par exemple en matière plastique extrudée, comprenant un fond en forme de bande et deux ailes longitudinales s'étendant respectivement à partir des côtés de cette bande, du type comprenant une partie de recouvrement à profil général en forme de U, définissant deux parois latérales, caractérisé en ce qu'il comporte intérieurement au moins une rainure latérale définie et localisée entre une face intérieure d'une telle paroi latérale de ladite partie de recouvrement et une cloison sensiblement parallèle à celle-ci, de façon qu'une aile précitée de ladite goulotte puisse s'engager dans ladite rainure latérale lors du montage de l'accessoire et en ce que ladite rainure latérale contient des nervures relativement acérées aptes à s'incruster dans ledit matériau relativement tendre de ladite aile lors d'un montage dudit accessoire par emboîtement perpendiculairement à la direction longitudinale de ladite goulotte.

Avec un tel agencement, l'accessoire monté par engagement à force sur la goulotte est immédiatement immobilisé longitudinalement par crantage des bords de celle-ci. L'accessoire comporte en outre des moyens de clipsage coopérant avec des éléments de structure de ladite goulotte, pour son immobilisation transversalement à la direction longitudinale de la goulotte. Ces éléments de structure peuvent notamment être des gorges longitudinales débouchant extérieurement sur les ailes de la goulotte et souvent destinées au montage du couvercle. Dans ce cas, le couvercle est coupé plus court et l'accessoire vient s'emboîter sur la goulotte en le recouvrant sur une certaine distance.

Avantageusement, l'accessoire comporte deux telles rainures latérales parallèles définies respectivement pour coopérer avec les deux ailes parallèles de la goulotte.

Classiquement, la goulotte comporte un jonc, par exemple cylindrique, sur le bord de chaque aile longitudinale. Les nervures acérées ménagées dans la ou les rainures latérales précitées sont telles que celles-ci puissent créer des entailles, préférentiellement dans les joncs, lors du montage en force de l'accessoire perpendiculairement à la direction longitudinale de la goulotte.

L'invention sera mieux comprise et d'autres avantages de celle-ci apparaîtront plus clairement à la lumière de la description qui va suivre d'un accessoire conforme à son principe, donnée uniquement à titre d'exemple et faite en référence aux dessins annexés dans lesquels:
- la figure 1 est une section d'une goulotte d'un conduit de câblage électrique susceptible de recevoir un accessoire conforme à l'invention ;
- la figure 2 est une vue en élévation, selon la flèche II de la figure 3, d'un accessoire formant embout, conforme au principe de l'invention ;
- la figure 3 est une vue de dessous de l'accessoire ;
- la figure 4 est une vue de détail à plus grande échelle de l'encadré IV de la figure 2 et illustrant la structure d'une rainure pratiquée dans ledit accessoire ; et
- la figure 5 est une vue de détail analogue à la figure 4 illustrant le montage de l'accessoire sur la goulotte.

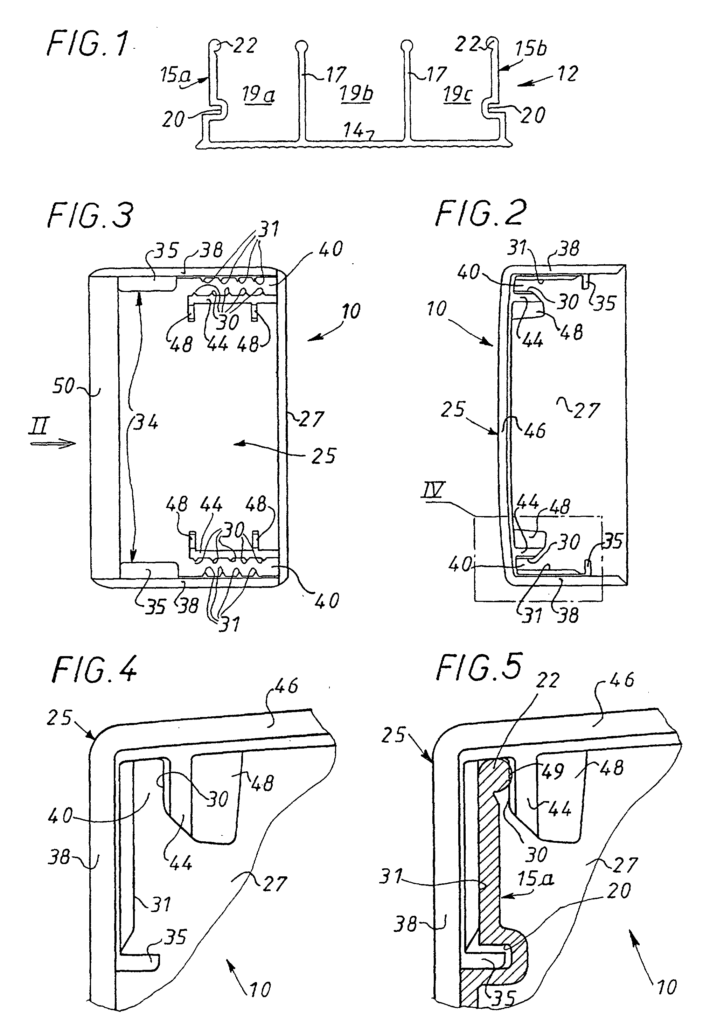

L'accessoire 10 pour conduit de câblage tel que représenté, constitue un embout destiné à venir se monter à l'extrémité d'un conduit de câblage électrique, pour fermer cette extrémité à la fin du câblage. Le conduit est classiquement constitué d'une goulotte 12 telle que celle qui est représentée sur la figure 1 et d'un couvercle. La goulotte est en matière plastique extrudée, c'est-à-dire en matériau relativement tendre. Elle comprend un fond 14 constituant une bande plate destinée à être fixée à une paroi et deux ailes longitudinales 15a, 15b s'étendant sensiblement parallèlement le long des côtés de cette bande et rattachées respectivement à ceux-ci. Deux autres cloisons longitudinales 17 s'étendent perpendiculairement à la bande, à l'intérieur du profilé pour définir trois chemins de câblage 19a-19c parallèles. Les ailes 15a, 15b de la goulotte sont pourvues de gorges longitudinales 20 débouchant extérieurement. Ces gorges sont normalement prévues pour le montage du couvercle par emboîtement à force. Ce couvercle est classique et ne fait pas partie de l'invention. Il n'a donc pas été représenté. En outre, le bord de chaque aile longitudinale 15a, 15b comporte un jonc 22, par exemple sensiblement cylindrique. Comme on le verra plus loin, ces deux joncs sont plus particulièrement mis à profit pour l'immobilisation de l'accessoire.

Quelle que soit sa fonction, l'accessoire comporte une partie de recouvrement 25 conformée et dimensionnée pour pouvoir coiffer un tronçon d'une telle goulotte 12 en s'emboîtant sur celle-ci. S'agissant ici d'un embout, l'accessoire ne comporte qu'une telle partie de recouvrement 25 à profil général en forme de U, fermée à une extrémité par une paroi transversale 27 dont la fonction est d'obturer l'extrémité d'un conduit de câblage électrique constitué d'une goulotte et de son couvercle. Du côté opposé à la paroi 27, ladite partie de recouvrement comporte une bordure 50 amincie intérieurement, en forme de bande.

Selon une caractéristique importante de l'invention, la partie de recouvrement 25 comporte intérieurement des nervures 30, 31 relativement acérées susceptibles de s'incruster dans les ailes de la goulotte lors d'un montage en force de l'accessoire, perpendiculairement à la direction longitudinale de ladite goulotte.

Comme on le verra plus loin, ces nervures 30, 31 assurent principalement l'immobilisation longitudinale de l'accessoire 10 par rapport au conduit. En outre, l'accessoire comporte des moyens de clipsage 34 coopérant avec des éléments de structure de ladite goulotte pour son immobilisation transversalement à la direction longitudinale de la goulotte. Ainsi, la combinaison des nervures 30, 31 d'une part, et des moyens de clipsage 34 d'autre part, permet une immobilisation complète de l'accessoire sur la goulotte par simple emboîtement à force lors d'un montage "en façade", c'est-à-dire ne nécessitant pas d'introduire une partie de l'accessoire longitudinalement à l'intérieur du conduit.

Les moyens de clipsage 34 précités consistent ici en deux pattes parallèles 35 faisant saillie latéralement intérieurement de parois latérales 38 de ladite partie de recouvrement 25, plus précisément deux parois parallèles de celle-ci. Les pattes sont conformées, dimensionnées et positionnées à l'intérieur de la partie de recouvrement pour pouvoir s'engager dans les gorges longitudinales 20 de la goulotte 12 au moment du montage par emboîtement forcé de l'accessoire.

En outre, la partie de recouvrement 25 comporte intérieurement au moins une et de préférence deux rainures latérales 40 définies et localisées près des parois parallèles 38 de ladite partie de recouvrement et à l'intérieur de celle-ci afin qu'une aile 15a, 15b précitée de la goulotte s'engage dans chaque rainure latérale 40 lors du montage de l'accessoire. Les nervures acérées 30, 31 précitées sont ménagées à l'intérieur de chaque rainure latérale 40.

Comme cela apparaît clairement sur les dessins, les deux rainures latérales parallèles sont définies pour coopérer respectivement avec les deux ailes de la goulotte. Chaque rainure 40 est ménagée le long d'une face intérieure de l'une des deux parois parallèles 38 de ladite partie de recouvrement. Cette rainure est définie entre ladite face intérieure et une cloison 44 parallèle à celle-ci et faisant saillie intérieurement d'une paroi 46 sensiblement perpendiculaire aux deux parois parallèles 38, cette paroi 46 venant se placer au-dessus de la goulotte, à la place du couvercle. Les nervures acérées 30, 31 s'étendent sensiblement perpendiculairement à la paroi 46 de l'accessoire tant le long des faces intérieures des deux parois 38 que le long des faces en regard des cloisons 44 adjacentes. Chaque cloison 44 est rigidifiée par des renforts 48 venus de moulage, s'étendant à l'extérieur de la rainure. Ces renforts se rattachent à la fois à la cloison 44 et à la paroi 46 de la partie de recouvrement. Les nervures acérées 31 définies sur chaque face intérieure d'une paroi 38 s'étendent au-delà de la rainure latérale 40 adjacente, sensiblement jusqu'au niveau de la patte 35 des moyens de clipsage.

Comme cela est visible sur les dessins, les arêtes des nervures 31 portées par la face intérieure d'une paroi 38 et celles des nervures 30 portées par la cloison 44 voisine se situent dans deux plans parallèles espacés d'une distance inférieure à l'épaisseur d'un jonc 22 de la goulotte pour laquelle l'accessoire a été prévu. Il en résulte que c'est principalement le long de ce jonc 22 que les arêtes des nervures (surtout celles des nervures 30) creuseront des encoches 49 au moment de l'emboîtement de l'accessoire sur la goulotte.

Lorsque l'utilisateur désire mettre en place un tel accessoire formant embout de conduit, il lui suffit de couper le couvercle légèrement en retrait, longitudinalement par rapport à l'extrémité de la goulotte 12, d'une distance inférieure à la longueur de ladite partie de recouvrement 25, en faisant en sorte que le bord découpé du couvercle se situe en regard de la bordure 50 et d'emboîter ledit accessoire à force à l'extrémité de la goulotte. Cette action a d'abord pour conséquence d'incruster des nervures 30, 31 acérées précitées dans les parois parallèles de la goulotte et plus particulièrement dans les joncs 22 définis le long des bords de celles-ci, afin d'immobiliser l'accessoire longitudinalement par rapport à la goulotte. Puis, en fin de course, les pattes 35 s'engagent dans les gorges longitudinales 20, ce qui a pour conséquence d'immobiliser l'accessoire transversalement à la direction longitudinale du conduit. De ce fait, ledit accessoire est complètement immobilisé sur la goulotte sans intervention de moyens de fixation supplémentaires tels que colle ou vis.

Bien entendu l'invention n'est pas limitée au mode de réalisation de l'accessoire qui vient d'être décrit. Celui-ci peut avoir des formes très différentes dictées par sa fonction. En particulier, le principe de verrouillage de l'accessoire sur la goulotte peut être mis en oeuvre dans un joint de couvercle dudit conduit, c'est-à-dire une pièce destinée à venir raccorder deux tronçons de couvercle emboîtés bout à bout sur la même goulotte ou encore dans un dispositif de recouvrement pour angle de conduit.

## Revendications

1. Accessoire pour conduit de câblage électrique, ledit conduit comprenant une goulotte (12) en matériau relativement tendre, par exemple en matière plastique extrudée, comprenant un fond en forme de bande et deux ailes longitudinales (15a, 15b) s'étendant respectivement à partir des côtés de cette bande, du type comprenant une partie de recouvrement (25) à profil général en forme de U, définissant deux parois latérales (38), **caractérisé en ce qu'**il comporte intérieurement au moins une rainure latérale (40) définie et localisée entre une face intérieure d'une telle paroi latérale de ladite partie de recouvrement et une cloison (44) sensiblement parallèle à celle-ci, de façon qu'une aile précitée de ladite goulotte puisse s'engager dans ladite rainure latérale lors du montage de l'accessoire et **en ce que** ladite rainure latérale contient des nervures relativement acérées (30, 31) aptes à s'incruster dans ledit matériau relativement tendre de ladite aile lors d'un montage dudit accessoire par emboîtement perpendiculairement à la direction longitudinale de ladite goulotte.

2. Accessoire selon la revendication 1, **caractérisé en ce qu'**il comporte en outre des moyens de clipsage (34) coopérant avec des éléments (20) de ladite goulotte pour son immobilisation transversalement à la direction longitudinale de ladite goulotte.

3. Accessoire selon la revendication 1, **caractérisé en ce qu'**il comporte deux rainures latérales (40) parallèles définies respectivement pour coopérer avec les deux ailes (15a, 15b) de la goulotte.

4. Accessoire selon la revendication 1, **caractérisé en ce que** la ou chaque cloison (44) fait saillie intérieurement d'une paroi (46) sensiblement perpendiculaire auxdites deux parois latérales.

5. Accessoire selon la revendication 4, **caractérisé en ce que** ladite face intérieure et la face en regard de ladite cloison sont munies de nervures (30, 31) précitées, parallèles entre elles.

6. Accessoire selon la revendication 1, pour montage sur une goulotte (12) dans laquelle le bord de chaque aile longitudinale précitée comporte un jonc (22), par exemple sensiblement cylindrique, **caractérisé en ce que** les nervures sont disposées sur deux parois parallèles de la rainure (40) correspondante et **en ce que** les arêtes de telles nervures (30, 31) se situent dans deux plans parallèles espacés d'une distance inférieure à l'épaisseur dudit jonc (22).

7. Accessoire selon l'une des revendications précédentes **caractérisé en ce que** ladite cloison est rigidifiée par des renforts venus de moulage, s'étendant à l'extérieur de ladite rainure.

8. Accessoire selon l'une des revendications 2 à 7, **caractérisé en ce que** les ailes (15a, 15b) de ladite goulotte étant pourvues de gorges longitudinales (20) débouchant extérieurement, les moyens de clipsage précités consistent en deux pattes (35) parallèles faisant saillie latéralement intérieurement de parois de ladite partie de recouvrement, lesdites pattes étant conformées, dimensionnées et positionnées pour pouvoir s'engager dans lesdites gorges longitudinales (20) lors dudit montage en force dudit accessoire.

9. Accessoire selon l'une des revendications précédentes, **caractérisé en ce qu'**il constitue un embout de conduit de câblage électrique.

10. Accessoire selon l'une des revendications 1 à 9, **caractérisé en ce qu'**il constitue un joint de couvercle d'un tel conduit.

11. Accessoire selon l'une des revendications 1 à 9, **caractérisé en ce qu'**il constitue un dispositif de recouvrement pour angle de conduit.

12. Accessoire selon l'une des revendications précédentes, **caractérisé en ce que** ladite partie de recouvrement comporte une bordure (50) amincie.

## Patentansprüche

1. Zubehör für einen elektrischen Kabelkanal, der eine Rinne (12) aus relativ weichem Werkstoff, beispielsweise aus extrudiertem Kunststoff, mit einem Boden in Form eines Bandes und zwei Längswangen (15a, 15b) aufweist, die sich von den Seiten dieses Bandes aus erstrecken, sowie einen Abdeckteil (25) mit allgemein U-förmigem Profil, der zwei Seitenwände (38) bildet, **dadurch gekennzeichnet, daß** es innen mindestens eine seitliche Nut (40) aufweist, die zwischen einer Innenseite einer solchen Seitenwand des Abdeckteils und einer zu dieser im wesentlichen parallelen Zwischenwand (44) abgegrenzt und angeordnet ist, so daß eine Wange der Rinne in diese seitliche Nut bei der Montage des Zubehörs eintreten kann, und daß die seitliche Nut relativ scharfe Rippen (30, 31) enthält, die dafür ausgelegt sind, sich in dem relativ weichen Werkstoff des Schenkels bei der Montage des Zubehörs durch Einstecken senkrecht zur Längsrichtung der Rinne festzusetzen.

2. Zubehör nach Anspruch 1, **dadurch gekennzeichnet, daß** es außerdem Einrastmittel (34) aufweist, die mit Elementen (20) der Rinne für ihre Blockierung quer zur Längsrichtung der Rinne zusammenwirken.

3. Zubehör nach Anspruch 1, **dadurch gekennzeichnet, daß** es zwei parallele seitliche Nuten (40) aufweist, die jeweils ausgebildet sind, um mit den beiden Wangen (15a, 15b) der Rinne zusammenzuwirken.

4. Zubehör nach Anspruch 1, **dadurch gekennzeichnet, daß** die oder jede Zwischenwand (44) innen an einer Wand (46) vorsteht, die zu den beiden Seitenwänden im wesentlichen senkrecht ist.

5. Zubehör nach Anspruch 4, **dadurch gekennzeichnet, daß** die Innenseite und die gegenüberliegende Seite der Zwischenwand mit zueinander parallelen Rippen (30, 31) versehen sind.

6. Zubehör nach Anspruch 1 zur Montage auf einer Rinne (12), in der der Rand jeder Längswange einen beispielsweise im wesentlichen zylindrischen Wulst (22) aufweist, **dadurch gekennzeichnet, daß** die Rippen auf zwei parallelen Wänden der entsprechenden Nut (40) angeordnet sind und daß die Kanten solcher Rippen (30, 31) in zwei parallelen Ebenen liegen, deren Abstand voneinander kleiner als die Dicke des Wulstes (22) ist.

7. Zubehör nach einem der vorhergehenden Ansprüche, **dadurch gekennzeichnet, daß** die Zwischenwand durch mitgeformte Verstärkungen versteift ist, die sich außerhalb der Nut erstrecken.

8. Zubehör nach einem der Ansprüche 2 bis 7, **dadurch gekennzeichnet, daß** die Wangen (15a, 15b) der Rinne mit außen ausmündenden Längsnuten (20) versehen sind und die Einrastmittel aus zwei parallelen Lappen (35) bestehen, die innen seitlich an Wänden des Abdeckteils vorstehen, wobei diese Lappen geformt, bemessen und angeordnet sind, um bei der unter Ausübung von Kraft vorgenommenen Montage des Zubehörs in die Längsnuten (20) eintreten zu können.

9. Zubehör nach einem der vorhergehenden Ansprüche, **dadurch gekennzeichnet, daß** es einen Aufsatz für einen elektrischen Kabelkanal bildet.

10. Zubehör nach einem der Ansprüche 1 bis 9, **dadurch gekennzeichnet, daß** es eine Deckelverbindung für einen solchen Kanal bildet.

11. Zubehör nach einem der Ansprüche 1 bis 9, **dadurch gekennzeichnet, daß** es eine Abdeckvorrichtung für einen Kanalwinkel bildet.

12. Zubehör nach einem der vorhergehenden Ansprüche, **dadurch gekennzeichnet, daß** der Abdeckteil einen verdünnten Rand (50) besitzt.

## Claims

1. An electrical cabling conduit accessory, said conduit comprising a channel (12) of relatively soft material, for example of extruded plastic material, comprising a bottom in the form of a strip and two longitudinal limbs (15a, 15b) extending respectively from the sides of said strip, of the type comprising a cover portion (25) of general U-shaped profile defining two lateral walls (38), **characterised in that** it internally comprises at least one lateral groove (40) defined and located between an internal face of such a lateral wall of said cover portion and a partition (44) which is substantially parallel thereto, in such a way that a said limb of said channel can engage into said lateral groove upon assembly of the accessory and that said lateral groove contains relatively sharp ribs (30, 31) capable of digging into said relatively soft material of said limb upon assembly of said accessory by engagement perpendicularly to the longitudinal direction of said channel.

2. An accessory according to claim 1 **characterised in that** it further comprises clipping means (34) co-operating with elements (20) of said channel for immobilisation thereof transversely with respect to the longitudinal direction of said channel.

3. An accessory according to claim 1 **characterised in that** it comprises two parallel lateral grooves (40) respectively defined to co-operate with the two limbs (15a, 15b) of the channel.

4. An accessory according to claim 1 **characterised in that** the or each partition (44) projects internally from a wall (46) substantially perpendicular to said two lateral walls.

5. An accessory according to claim 4 **characterised in that** said internal face and the facing face of said partition are provided with said mutually parallel ribs (30, 31).

6. An accessory according to claim 1 for assembly to a channel (12) in which the edge of each said longitudinal limb comprises a bead (22) which for example is substantially cylindrical **characterised in that** the ribs are disposed on two parallel walls of the corresponding groove (40) and that the edges of said ribs (30, 31) are disposed in two parallel planes spaced by a distance which is smaller than the thickness of said bead (22).

7. An accessory according to one of the preceding claims **characterised in that** said partition is made rigid by moulded reinforcements extending from the exterior of said groove.

8. An accessory according to one of claims 2 to 7 **characterised in that** the limbs (15a, 15b) of said channel being provided with externally opening longitudinal grooves (20), said clipping means comprise two parallel lugs (35) which project laterally internally from walls of said cover portion, said lugs being shaped, dimensioned and positioned to be capable of engaging into said longitudinal grooves (20) upon assembly of said accessory by force.

9. An accessory according to one of the preceding claims **characterised in that** it constitutes an electrical cabling conduit terminal portion.

10. An accessory according to one of claims 1 to 9 **characterised in that** it constitutes a cover joint of such a conduit.

11. An accessory according to one of claims 1 to 9 **characterised in that** it constitutes a cover device for a conduit corner.

12. An accessory according to one of the preceding claims **characterised in that** said cover portion comprises a reduced-thickness edge (50).
